# EUROPEAN PATENT APPLICATION

(11) **EP 4 600 605 A1**
(43) Date of publication of application: **13.08.2025**
(21) Application number: 22961352.6
(22) Date of filing: 03.10.2022
(51) Int. Cl.: G01C 3/06, G01S 17/06

(54) **IMAGE PROCESSING DEVICE AND IMAGE PROCESSING METHOD**

(71) Applicant: Astemo, Ltd., Tokyo 100-0004 (JP)
(72) Inventor: MOIZUMI Hiroki, Hitachinaka-shi, Ibaraki 312-8503 (JP); DOI Koji, Hitachinaka-shi, Ibaraki 312-8503 (JP); MITOMA Hiroto, Hitachinaka-shi, Ibaraki 312-8503 (JP)
(74) Representative: MERH-IP Matias Erny Reichl Hoffmann Patentanwälte PartG mbB
(86) International application number: PCT/JP2022/036979
(87) International publication number: WO 2024/075161

(57) **Abstract**

An image processing device includes: a distance calculation unit that calculates a distance to a detection target searched from an acquired image; a speed calculation unit that calculates a speed of the detection target; and a filter processing unit that performs a filter process on the calculated distance and speed. Here, the filter processing unit performs a plurality of filter processes for a predetermined period of time and then selects one of the plurality of filter processes.

## Description

### Technical Field

The present invention relates to an image processing device and an image processing method.

### Background Art

In recent years, advanced driver-assistance systems and automated driving systems for vehicles (mobile bodies), using external recognition sensors such as on-board cameras and radar, have attracted much attention.

For example, adaptive cruise control (ACC), autonomous emergency braking (AEB), and the like can be cited as driving support functions for improving the convenience and comfort of a vehicle. The ACC measures a distance and a relative speed to a vehicle traveling ahead and automatically performs follow-up travel control. The AEB automatically performs braking to avoid or reduce collision when there is a risk of collision with a traveling vehicle, a pedestrian, a bicycle, or the like in front of the host vehicle.

Demand for object detection technology is increasing to improve the performance of ACC and AEB.

An object detection technology using an on-vehicle camera includes a technology in which a monocular camera and a radar are combined, an object such as a vehicle is detected from an image captured by the monocular camera, and a distance and a relative speed to the object are measured by the radar. Another technique is also used in which a distance to an object is measured by a projection difference (parallax) of a plurality of images captured using a stereo camera, and a relative speed is calculated from the amount of change in distance between frames.

When an object is detected by these on-vehicle cameras, an error is large in the observation related to distance and speed calculated in units of frames from a captured image. Accordingly, vehicle control is often performed using values smoothed by performing a filter process for easier handling.

PTL 1 discloses an object detection device including: a first distance measurement unit that performs distance measurement by detecting parallax for the same object through stereo matching between a pair of left and right images captured by a stereo camera; and a second distance measurement unit that detects parallax by performing stereo matching based on a luminance difference when a deviation in sensitivity balance occurs between a pair of left and right images stereoscopically captured, due to backlight or the like, and the reliability of a distance image generated by the first distance measurement unit decreases.

Furthermore, in the object detection device described in PTL 1, the distance measurement by the first distance measurement unit and the distance measurement by the second distance measurement unit are selectively switched and input to a recognition processing unit, enabling continuous distance measurement to be performed even under deteriorating environmental conditions such as backlight.

### Citation List

### Patent Literature

PTL 1: JP 2008-151659 A

### Summary of Invention

### Technical Problem

Meanwhile, when a filter process is performed during distance measurement, it is necessary to provide an initial value to the measured distance value and perform the calculation. As an easy method of setting the initial value, it is conceivable to provide an arbitrary fixed value or an observed value immediately after the start of detection as the initial value.

However, since the state quantity is unknown immediately after the start of object detection, the error increases even in the value after the filter process when the initial value deviates from the true value. In particular, immediately after the start of detection of a distant vehicle with low observation accuracy or an oncoming vehicle with a high relative speed, the error tends to be large, and it takes time for the filter error to converge. This error immediately after the start of detection is problematic for control of an oncoming vehicle or a distant vehicle with a higher relative speed when the vehicle rapidly approaches the oncoming vehicle or the distant vehicle.

For example, in the object detection device described in PTL 1, the processing content is changed to cope with deteriorating environmental conditions such as backlight, but it is difficult to reduce the error immediately after the start of object detection.

An object of the present invention is to provide an image processing device and an image processing method that can quickly perform filter error convergence when an object is detected through image processing.

### Solution to Problem

To solve the above problem, for example, the configuration described in the claims is adopted.

The present application includes a plurality of means for solving the above problem, and one example is an image processing device including: a distance calculation unit that calculates a distance to a detection target searched from an acquired image; a speed calculation unit that calculates a speed of the detection target; and a filter processing unit that performs a filter process on the distance calculated by the distance calculation unit and the speed calculated by the speed calculation unit. The filter processing unit performs a plurality of filter processes for a predetermined period of time and then selects one of the plurality of filter processes.

### Advantageous Effects of Invention

According to the present invention, the speed error immediately after the start of object detection can be reduced.

Problems, configurations, and effects other than those described above will be clarified by the following description of embodiments.

### Brief Description of Drawings

[FIG. 1] FIG. 1 is a block diagram showing a configuration example of an image processing device according to an embodiment of the present invention.
[FIG. 2] FIG. 2 is a block diagram showing a hardware configuration example of the image processing device according to the embodiment of the present invention.
[FIG. 3] FIG. 3 is a flowchart showing an operation example of image processing according to the embodiment of the present invention.
[FIG. 4] FIG. 4 is a diagram schematically showing a relationship between a relative speed and an elapsed time during a parallel filter process according to the embodiment of the present invention.
[FIG. 5] FIG. 5 is a diagram schematically showing a relationship between a distance and an elapsed time during the parallel filter process according to the embodiment of the present invention.

### Description of Embodiments

Hereinafter, an image processing device and an image processing method according to an embodiment of the present invention will be described with reference to the accompanying drawings.

### [Configuration of image processing device]

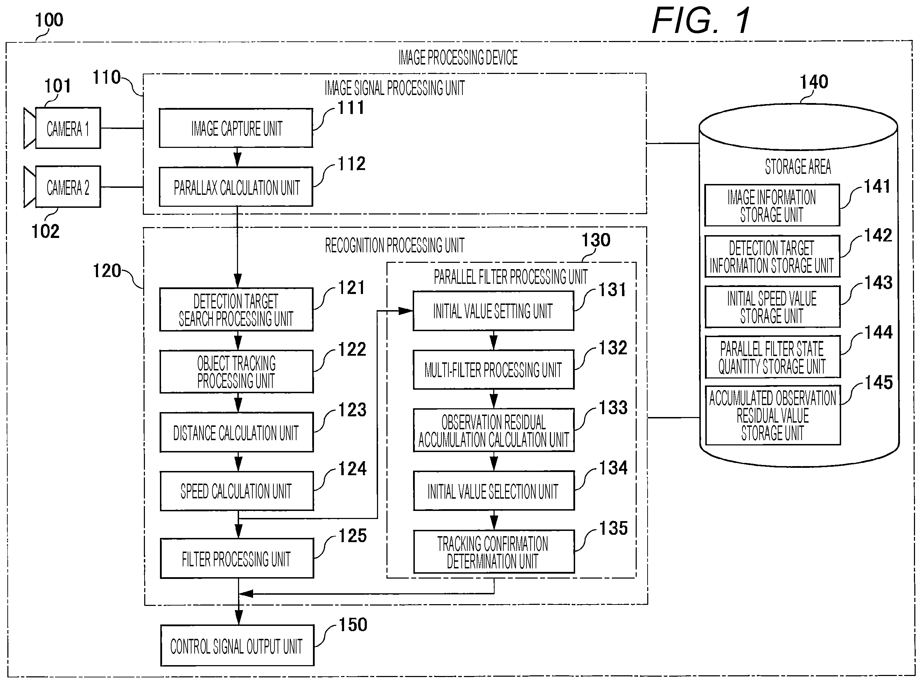

FIG. 1 is a configuration diagram of an image processing device 100 according to the present embodiment.

The image processing device 100 of the present embodiment detects and identifies a person and an object, such as a vehicle traveling in front of the host vehicle, using an image captured by a camera mounted on a vehicle that is a mobile body.

The image processing device 100 includes two cameras 101, 102 that are imaging devices, an image signal processing unit 110, a recognition processing unit 120, a storage area 140, and a control signal output unit 150.

The two cameras 101, 102 form a stereo camera, where the camera 101 is a left camera and the camera 102 is a right camera.

The left camera 101 and the right camera 102 are installed side by side horizontally to obtain a field of view in front of the host vehicle.

Image signals captured by the left camera 101 and the right camera 102 are supplied to an image capture unit 111 of the image signal processing unit 110 and processed, resulting in image signals with a constant frame period. Note that the images captured by the left camera 101 and the right camera 102 may be any image suitable for an object detection process, such as a color image, a grayscale image, or an infrared image.

The left image captured by the left camera 101 and the right image captured by the right camera 102 are recorded in an image information storage unit 141 of the storage area 140.

The left image captured by the left camera 101 and the right image captured by the right camera 102 are supplied to a parallax calculation unit 112.

The parallax calculation unit 112 uses the left image and the right image as input information, searches for an area similar to a specific area in the right image from the left image, and obtains the parallax between the right image and the left image. The parallax calculation unit 112 executes this process on the entire area of the right image, and outputs a parallax image with the left image. The parallax image thus obtained is recorded in the image information storage unit 141 of the storage area 140.

The image information generated by the image signal processing unit 110 is supplied to the recognition processing unit 120 via the image information storage unit 141 in the storage area 140.

The recognition processing unit 120 includes a detection target search processing unit 121, an object tracking processing unit 122, a distance calculation unit 123, a speed calculation unit 124, a filter processing unit 125, and a parallel filter processing unit 130.

The parallel filter processing unit 130 includes an initial value setting unit 131, a multi-filter processing unit 132, an observation residual accumulation calculation unit 133, an initial value selection unit 134, and a tracking confirmation determination unit 135.

The detection target search processing unit 121 in the recognition processing unit 120 receives the left image, the right image, and the parallax image as inputs, searches for an object such as a vehicle to be detected from the image, and outputs the position and size information on the object to be detected on the image as processing results. The processing results output from the detection target search processing unit 121 are recorded in a detection target information storage unit 142 of the storage area 140.

The object tracking processing unit 122 performs an object tracking process using the left image, the right image, the parallax image, and the processing result of the detection target search processing unit 121 as inputs. That is, the object tracking processing unit 122 predicts the position at the current time based on the position information included in the object information at the previous time, and performs object search under the assumption that the same object is likely to exist around the predicted position. In this manner, the object tracking processing unit 122 generates time-series continuous tracking information for the same object. The generated time-series continuous tracking information for the same object is recorded in the detection target information storage unit 142 of the storage area 140.

With the parallax image and the tracking information as inputs, the distance calculation unit 123 performs a distance calculation process of calculating the distance from each of the cameras 101, 102 to the object being tracked, and records the calculated distance information in the detection target information storage unit 142 of the storage area 140.

Using the left image, the right image, the parallax image, and the tracking information, the speed calculation unit 124 performs a speed calculation process of calculating the relative speed between the host vehicle and the object being tracked from the amount of change in distance information between the current time and the past time. The relative speed information calculated by the speed calculation unit 124 is recorded in the detection target information storage unit 142 of the storage area 140.

The filter processing unit 125 performs a filter process using the distance and the relative speed of the object under tracking recorded in the detection target information storage unit 142 of the storage area 140 as inputs, and estimates the state quantity of the distance and the relative speed of the object under tracking.

The parallel filter processing unit 130 executes a plurality of different filter processes on the object information immediately after the start of tracking as described below.

The initial value setting unit 131 sets different initial speed values for the plurality of filters, and records the set initial speed values in the initial speed value storage unit 143 of the storage area 140. As the initial speed value that is set here, a fixed value arbitrarily determined in advance may be provided. Alternatively, an initial speed value determined according to the host vehicle speed may be provided. Furthermore, a different initial speed value may be provided according to the identification result of the detection target, such as whether the detection target is a vehicle or a pedestrian.

The multi-filter processing unit 132 holds an independent state quantity for each of the plurality of filters, performs a filter process based on an initial speed value provided for each filter by using, as inputs, the distance and the relative speed of the object being tracked, and estimates the state quantity of the object being tracked. Then, each estimated filter result is recorded in a parallel filter state quantity storage unit 144 of the storage area 140.

The observation residual accumulation calculation unit 133 calculates a residual between an estimated distance value predicted by each of the plurality of filters and an observed distance value obtained at the current time by the distance calculation unit 123, and accumulates the results. The accumulated residual value is recorded in an accumulated observation residual value storage unit 145 of the storage area 140.

The initial value selection unit 134 selects a filter with the smallest residual among the accumulated observation residual values of the respective filter results as an optimum filter result.

The tracking confirmation determination unit 135 determines whether tracking has been confirmed based on the number of continuous tracking instances for the object being tracked and the initial value selection result.

The object detection result obtained by the recognition processing unit 120 is transmitted to the control signal output unit 150, and thereafter, is used as the input information on the vehicle control system. For example, the object detection result obtained by the recognition processing unit 120 is used for controlling ACC and AEB in the vehicle control system.

### [Hardware Configuration of Image Processing Device]

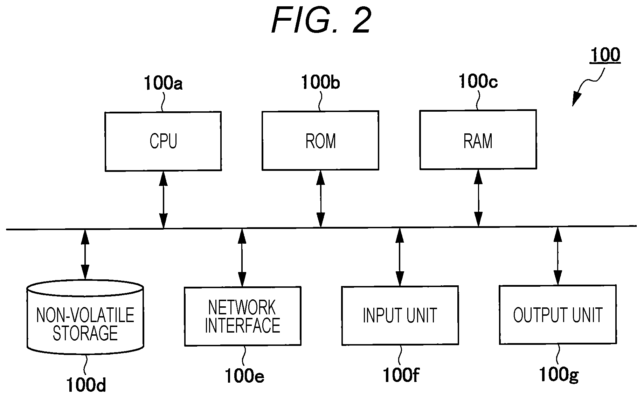

FIG. 2 shows an example of a hardware configuration when the image processing device 100 is configured by a computer.

The image processing device 100 includes a central processing unit (CPU) 100a, a read-only memory (ROM) 100b, a random-access memory (RAM) 100c, a non-volatile storage 100d, a network interface 100e, an input unit 100f, and an output unit 102e, each of which is connected to a bus.

The CPU 100a is an arithmetic processing unit that reads a program code of software for implementing the function, performed by the image processing device 100 from the ROM 100b or the non-volatile storage 100d, and executes the program code. The ROM 100b stores a program code. The RAM 100c is used as a work area for executing arithmetic processing.

By executing arithmetic processing according to program codes in the RAM 100c under the control of the CPU 100a, various processing function units are configured in the RAM 100c. For example, the RAM 100c includes the image signal processing unit 110 and the recognition processing unit 120 shown in FIG. 1.

As the non-volatile storage 100d, for example, a large-capacity information storage medium such as a hard disk drive (HDD), a solid-state drive (SSD), or a memory card is used. The non-volatile storage 100d stores software that implements the functions of the image processing device 100, and setting data such as data and initial values obtained by executing the program.

For example, a network interface card (NIC) or the like is used as the network interface 100e, and data is transmitted and received to and from another device. For example, the network interface 100e communicates with an external device to transmit image data and the like.

The input unit 100f performs an input process for image data and the like captured by the cameras 101, 102.

An output unit 100g performs an output process as the control signal output unit 150.

Although FIG. 2 shows a hardware configuration when the image processing device 100 is configured by the computer, some or all of the functions performed by the image processing device 100 may be implemented by hardware such as a field programmable gate array (FPGA) or an application specific integrated circuit (ASIC).

### [Object detection process]

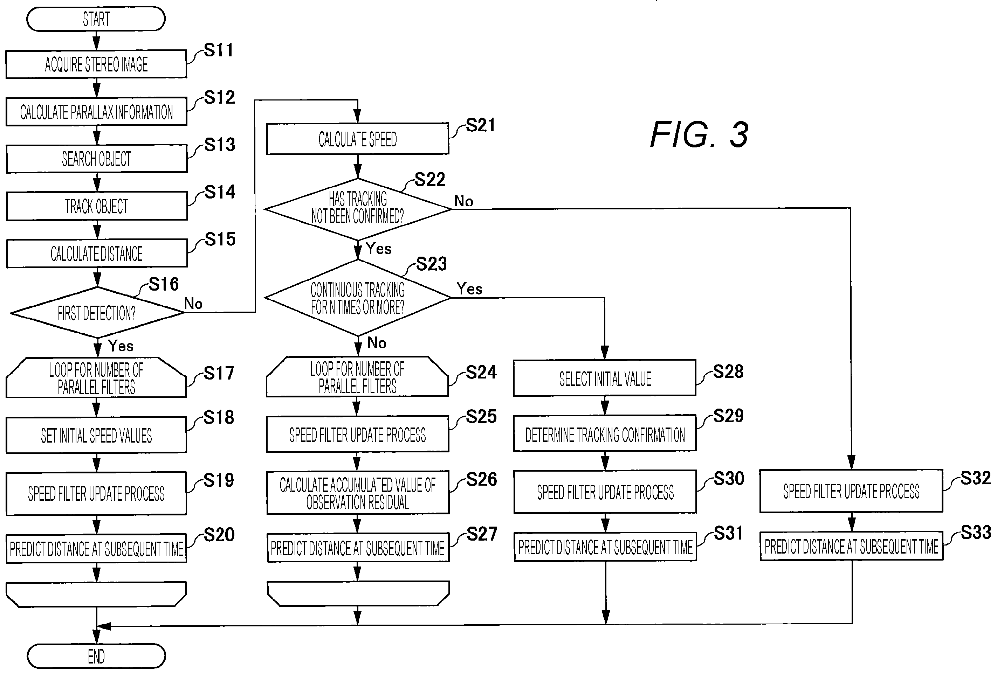

FIG. 3 is a flowchart showing an object detection process performed by image processing device 100 according to the present embodiment.

The image processing in the image processing device 100 is executed for each image captured by the cameras 101, 102 at a predetermined cycle.

First, the image capture unit 111 acquires a stereo image captured by the cameras 101, 102 that are imaging devices (step S11). After acquiring the stereo image, the parallax calculation unit 112 calculates the parallax at each pixel from the projection difference of each image to generate a parallax image (step S12). The stereo image and the parallax image are recorded in the image information storage unit 141 of the storage area 140.

Next, the detection target search processing unit 121 performs object search from the image information storage unit 141, using the stereo image and the parallax image as input information (step S13).

Here, a specific example of the object search performed by the detection target search processing unit 121 will be described. For example, the detection target search processing unit 121 groups parallaxes with similar values among adjacent parallaxes from the parallax image and creates a rectangle surrounding an area that includes the grouped parallaxes.

When the vertical width and the horizontal width of the created rectangle reach certain values or greater, an object to be identified is likely to exist. Therefore, the detection target search processing unit 121 generates the position information (coordinates on the parallax image) and size information (horizontal width and vertical width) of the rectangle as detection object candidates. Note that a plurality of detection object candidates may be obtained. At this point, the detection target search processing unit 121 may narrow down the detection object candidates by, for example, a rectangular position on the parallax image or an aspect ratio of the rectangle, or may output all the obtained identification candidates.

Furthermore, to narrow down to object information more useful for control, the detection target search processing unit 121 may identify the type of a detection object candidate, such as whether the detection target is a vehicle or a pedestrian, from an image by using a feature such as shape. For example, a large amount of vehicle and other images may be collected in advance, and object identification may be performed using an identifier obtained through machine learning.

The result obtained by the detection target search processing unit 121 is recorded in the detection target information storage unit 142 of the storage area 140.

Returning to the flowchart of FIG. 3, the description will be continued. Next, the object tracking processing unit 122 performs an object tracking process on the object searched by the detection target search processing unit 121 (step S14). Here, the object tracking processing unit 122 predicts the position at the current time based on the position information included in the object information at the previous time. Then, the object tracking processing unit 122 performs object search under the assumption that the same object is likely to exist around the predicted position. Thereby, the object tracking processing unit 122 generates time-series continuous tracking information for the same object.

As the tracking process, the following can be considered, for example: a method of searching for the object at the current time by template matching, using the image of the object at the previous time as a template; a method of estimating the amount of movement of each pixel in the detection frame of the object being tracked by an optical flow; and other methods. The object tracking processing unit 122 predicts the motion of the object at the current time from the position at the previous time and the amount of movement in the past.

In addition, immediately after the start of detection, the filter results for distance and speed may be unstable, or even if detection and identification are performed with a single image, erroneous detection and erroneous identification may occur. Thus, the reliability of detection and identification can be improved by performing determination using information on a plurality of frames, treating the information as an undetermined detection target for a certain period of time from the start of detection.

Therefore, the object tracking processing unit 122 determines whether the object is to be detected in a tracking unconfirmed state when a certain period of time has not elapsed from the start of detection, and in a tracking confirmed state when tracking continues for the certain period of time or longer. In this manner, the object tracking processing unit 122 updates the object information at the current time and records the updated object information in the detection target information storage unit 142 of the storage area 140.

Next, the distance calculation unit 123 performs a distance calculation process of calculating the horizontal distance from the cameras 101, 102 to the object using the parallax information (step S15). In the stereo camera, the distance can be calculated by the principle of triangulation using the baseline length, the focal length, the pixel size parameters, and the parallax between the cameras 101, 102. The distance information calculated by the distance calculation unit 123 is recorded in the detection target information storage unit 142 of the storage area 140.

Next, the recognition processing unit 120 determines whether the tracking of the detected object has started or whether the object has been detected for the first time this time (step S16). When it is the first detection (Yes in step S16), the parallel filter processing unit 130 executes a repetitive process in step S17 for the number of filters to be executed in parallel.

Examples of the filter process here include a process using a Kalman filter or the like. The Kalman filter is considered to be suitable for a system that estimates the current state from observation including an error, such as measurement of the position and speed of an object by image processing.

In addition, the parallel filter processing unit 130 dynamically obtains an optimum parameter from the amount of error in an observed value obtained through hourly observation and the amount of error estimated by filtering, and estimates a state quantity at the current time with high accuracy. However, since the Kalman filter improves accuracy by repeating observation, prediction, and update of the state quantity, the initial state immediately after the start of the filter process may differ from the optimal parameter.

In particular, when the observation target is the relative speed of the vehicle, the true value may vary significantly depending on whether the vehicle is traveling at the same speed as the host vehicle, stopped, or approaching as an oncoming vehicle, and thus the error may be large immediately after the start of detection.

In the present embodiment, in step S17, the parallel filter processing unit 130 executes a plurality of Kalman filters with different parameters in parallel and estimates the state of the distance and the relative speed of the object in each filter.

At this time, the parallel filter processing unit 130 may execute the parallel filter process unconditionally, or may determine whether the parallel filter process needs to be executed, for example, when there are a plurality of detection targets, to reduce the processing load by prioritizing a detection target closest to the host vehicle or similar criteria.

The content of the parallel filter process in step S17 will be described. First, the initial value setting unit 131 sets different initial speed values for the respective filters to be executed in parallel (step S18). The different initial speed values set here are acquired from, for example, the initial speed value storage unit 143 of the storage area 140.

As the initial speed value set here, a fixed value arbitrarily determined in advance may be provided, or for example, an initial value determined according to the host vehicle speed may be provided. The initial speed value may be changed according to the identification result of the detection target, such as whether the detection target is a vehicle or a pedestrian.

Then, the multi-filter processing unit 132 executes a process for each filter, that is, an update process for the speed filter (step S19). In the filter process in the present embodiment, distance information and speed information obtained by observation are input. However, speed calculation is not performed because there is no past information at the time of first execution. Instead, the initial speed value set in step S18 is input.

Next, the multi-filter processing unit 132 predicts the distance of the object at the subsequent time based on the distance and the speed among the state quantities estimated by the filter processing in step S19 (step S20).

The multi-filter processing unit 132 records the processing results of steps S18 to S20 in the parallel filter state quantity storage unit 144 of the storage area 140, and terminates the process at the current time.

When the tracking of the object detected in step S16 has started (No in step S16), the speed calculation unit 124 calculates the relative speed of the object based on the information on the past time and the current time (step S21). A method for calculating the speed may be calculating the relative speed from the amount of temporal change in distance based on the distance, or calculating the speed using the optical flow of the object projected onto the image. The speed information calculated by the speed calculation unit 124 is recorded in the detection target information storage unit 142 of the storage area 140.

Next, the recognition processing unit 120 determines whether the tracking of the object of which the speed is calculated in Step S21 has been confirmed (Step S22). When tracking has not been confirmed in step S22 (Yes in step S22), the recognition processing unit 120 counts an elapsed time during which the object has been continuously tracked since the start of the detection and tracking of the object, and determines whether the number of continuous tracking instances is a certain number or greater (step S23).

When the number of continuous tracking instances is less than the certain number in step S23 (No in step S23), the parallel filter processing unit 130 repeats the process as many times as the number of filters to be executed in parallel, and executes the filter process in steps S25 to S27 described below (step S24).

The filter process in steps S25 to S27 will be described. First, similarly to step S19, the multi-filter processing unit 132 executes a process for each filter, that is, an update process for the speed filter (step S25).

First, the multi-filter processing unit 132 inputs distance information and speed information obtained by observation to the filter, because if the object is being tracked, there is past information and the speed was calculated in step S21.

Next, the observation residual accumulation calculation unit 133 calculates a difference between the observed value of the distance at the current time and the estimated distance value estimated by the filter, accumulates the residuals, and records the residual in the accumulated observation residual value storage unit 145 of the storage area 140 (step S26).

Further, the parallel filter processing unit 130 predicts the distance of the object at the subsequent time based on the distance and the speed estimated by the filter process similarly to the process of step S20 (step S27).

The parallel filter processing unit 130 records the results obtained by the execution of steps S25 to S27 in the parallel filter state quantity storage unit 144 of the storage area 140, and terminates the process at the current time.

When the number of continuous tracking instances is the certain number or greater in step S23 (Yes in step S23), the initial value selection unit 134 performs an initial value selection process (step S28). In the initial value selection process in step S28, an optimum filter process result is selected from a plurality of executed filter process results. After the next time, only the selected filter process is executed.

At this time, the initial value selection unit 134 selects a result with the smallest accumulated observation residual value of the distance as the optimum filter result.

When the filter process is performed with different initial values provided, the estimation result changes even if the same distance or speed is used as input information. In the case of a filter provided with an appropriate initial value, it is considered that the estimated value and the observed value change in a similar manner, and the accumulated value of the observation residuals decreases.

On the other hand, in a filter provided with an inappropriate initial value, it is considered that a deviation occurs between the estimated value and the observed value, and the accumulated value of the observation residual increases. Therefore, an optimum filter result can be selected by comparing the accumulated values of the observation residuals at the stage where the filter process has elapsed for a certain period of time.

After performing the initial value selection process, the tracking confirmation determination unit 135 determines whether tracking has been confirmed (step S29). Then, the tracking confirmation determination unit 135 determines that tracking has been confirmed when the tracking has been successfully continued for a certain period of time and the selection of the filter result has also been able to be executed.

Thereafter, similarly to the process of step S19, the multi-filter processing unit 132 performs the update process for the selected filter (step S30). Furthermore, the multi-filter processing unit 132 predicts the distance of the object at the subsequent time based on the distance and the speed estimated by the filter process (step S31).

The parallel filter processing unit 130 records the results obtained by executing the process in steps S28 to S31 in the parallel filter state quantity storage unit 144 of the storage area 140, and terminates the process at the current time.

When it is determined in step S22 that tracking has been confirmed (No in step S22), the multi-filter processing unit 132 executes the update process only for the selected filter (step S32). Then, the multi-filter processing unit 132 predicts the distance of the object at the subsequent time based on the distance and the speed estimated by the filter process in step S32 (step S33).

The results of steps S32 to S33 are recorded in the parallel filter state quantity storage unit 144 of the storage area 140, and the process at the current time is terminated.

### [Operation Example by Parallel filter process]

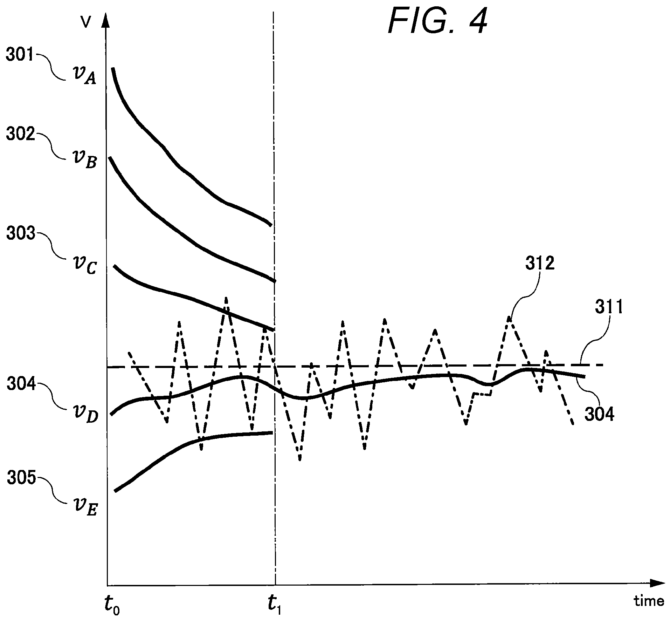

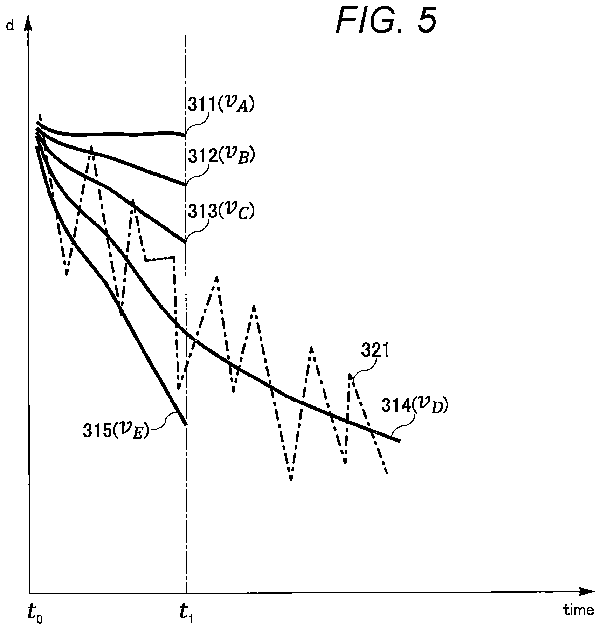

FIGS. 4 and 5 are schematic diagrams showing an operation example by the parallel filter process according to the present embodiment.

FIG. 4 is a graph showing the true value, the observed speed value, and the speed that is output by the parallel filter process, with the horizontal axis representing the elapsed time and the vertical axis representing a relative speed v of the object.

FIG. 5 is a graph showing the true value, the observed distance value, and the distance that is output by the parallel filter process, with the horizontal axis representing the elapsed time and the vertical axis representing a distance d.

In FIG. 4, a true value 311 of a relative speed of an object to be detected is indicated by a broken line. In the example of FIG. 4, the detection of the object is started at time t0, and an observed value 312 of the relative speed obtained hourly from the object is indicated by a one-dot chain line.

When the detection of the object is started at time t0, initial speed values for five filter processes provided by the initial value setting unit 131 are v_{A}, v_{B}, v_{C}, v_{D}, v_{E}, and FIG. 4 shows filter process results 301, 302, 303, 304, 305 for speeds at the initial speed values v_{A}, v_{B}, v_{C}, v_{D}, v_{E}.

In FIG. 5, an observed value 321 of the relative speed obtained hourly is also indicated by a one-dot chain line, and the filter process results 311, 312, 313, 314, 315 for distances at the initial speed values v_{A}, v_{B}, v_{C}, v_{D}, v_{E} are indicated.

Here, the initial value is set to five patterns as an example, but the number of patterns may be more or less than five.

When tracking has not been confirmed at the subsequent time and the number of tracking instances is less than a certain value, each filter process is executed by the multi-filter processing unit 132. Since the observed speed value 312 obtained by the speed calculation unit 124 varies but is distributed near the true value 311, each filter result gradually approaches the true value with time.

On the other hand, the observed distance value 321 obtained by the distance calculation unit 123 is as shown in FIG. 5. The multi-filter processing unit 132 executes each filter process to estimate the state quantity of the distance. However, since the state quantity of the speed is reflected in addition to the observed distance value at this time, a speed error also causes an error in the distance.

That is, when the estimated speed result is greater than the true speed value, the estimated distance result shifts in a direction farther away from the actual distance, and when the estimated speed result is smaller than the true speed value, the estimated distance result shifts in a direction closer to the actual distance.

As shown in FIG. 5, the greater the error in speed, the greater the difference between the observed distance value and the filter-estimated distance, and the degree of deviation from the true value can be quantified by accumulating the observation residuals hourly.

Here, it is assumed that the number of tracking instances reaches a certain number or greater at time t1 and the initial value selection process is performed by the initial value selection unit 134. At this time, the filter with the smallest accumulated observation residual value of the distance calculated in each filter process is selected as the optimum filter. In the examples shown in FIGS. 4 and 5, the filter results 304, 314 when the initial value v_{D} is set are selected as the optimum result. The results effective as the information used for the control are the results after time t1, and only the result with the smallest error is used for the control.

That is, after time t1, only the filter process results 304, 314, obtained when the initial value v_{D} is set, are continuously filtered by the filter processing unit 125.

### [Effects of Present Embodiment]

According to the image processing device and the image processing method executed by the image processing device of the present embodiment described above, the parallel filter process is performed, and a filter result with a small error is selected after the time when the process becomes effective (after t1 in FIGS. 4 and 5). Therefore, the time required for filter convergence can be shortened for an object with any relative speed. This enables an appropriate filter result to be selected even for a distant vehicle with low observation accuracy or an oncoming vehicle with a high relative speed, thereby reducing the speed error immediately after the start of object detection even in various situations. Therefore, when ACC or AEB is performed based on the output of the image processing device of the present embodiment, the performance of ACC or AEB can be improved.

Here, in the image processing device of the present embodiment, the distance calculation unit 123 calculates the distance based on the parallax of a plurality of images obtained from the two cameras 101, 102 that form a stereo camera, so that the distance can be easily calculated from the comparison of the images, and the distance can be appropriately calculated in selecting a filter result with a small error.

In the image processing device of the present embodiment, as described with reference to FIGS. 4 and **5****, a** plurality of filter processes are executed with different initial speeds, to increase the possibility of obtaining an appropriate filter result, which can enhance the effect of reducing the speed error immediately after the start of object detection.

Moreover, in the image processing device of the present embodiment, the predicted distance at the initial speed after the predetermined period of time is compared with the distance observed from the parallax of the plurality of images, and the filter process with the smallest difference in distance is selected as one optimum filter process, making it possible to select an appropriate filter process by a simple calculation of the difference in distance.

Furthermore, the image processing device of the present embodiment includes an initial speed setting unit that sets a plurality of initial speeds, a multi-filter processing unit, an observation residual accumulation calculation unit, and an initial value selection unit that selects a filter process with the smallest accumulated observation residual value, enabling easy and quick selection of an optimal filter process based on the accumulated observation residual value.

### [Modifications]

Note that the above embodiment has been described in detail for easy understanding of the present invention, and the invention is not necessarily limited to embodiments that include all the described configurations.

For example, in the embodiment described above, the distance calculation unit 123 of the recognition processing unit 120 has calculated the distance from each of two images of the stereo camera. However, if possible, the distance may be calculated from an image of one camera, or the distance of the object may be calculated with reference to information from another distance measurement unit.

The five initial speeds shown in each of FIGS. 4 and 5 are examples of the parallel filter process, and a parallel filter process with a different number of initial speeds may be performed. The plurality of initial speeds may also be switched to appropriate speeds according to the situation of the vehicle (travel speed, type of road being traveled, etc.).

Furthermore, the point of using the speed and distance obtained by the image processing device for ACC and AEB is also an example, and the speed and distance obtained by the image processing device of the present embodiment may be used for other controls.

In the configuration diagrams illustrated in FIGS. 1 and 2, the control lines and the information lines are indicated as considered necessary for the description, and not all the control lines and the information lines are necessarily shown in the product. In practice, almost all the configurations may be considered interconnected.

When the image processing device of the present example is configured by an information processing device such as a computer, a program for implementing the image processing device may be prepared in a non-volatile storage or a memory in the computer, or may be transferred by being placed in a recording medium such as an external memory, an integrated circuit (IC) card, a secure digital (SD) card, or an optical disk.

### Reference Signs List

- 100: image processing device
- 100a: CPU
- 100b: ROM
- 100c: RAM
- 100d: non-volatile storage
- 100e: network interface
- 100f: input unit
- 100g: output unit
- 101: camera (left camera)
- 102: camera (right camera)
- 102e: output unit
- 110: image signal processing unit
- 111: image capture unit
- 112: parallax calculation unit
- 120: recognition processing unit
- 121: detection target search processing unit
- 122: object tracking processing unit
- 123: distance calculation unit
- 124: speed calculation unit
- 125: filter processing unit
- 130: parallel filter processing unit
- 131: initial value setting unit
- 132: multi-filter processing unit
- 133: observation residual accumulation calculation unit
- 134: initial value selection unit
- 135: tracking confirmation determination unit
- 140: storage area
- 141: image information storage unit
- 142: detection target information storage unit
- 143: initial speed value storage unit
- 144: parallel filter state quantity storage unit
- 145: accumulated observation residual value STORAGE UNIT
- 150: control signal output unit

## Claims

1. An image processing device comprising:
a distance calculation unit that calculates a distance to a detection target searched from an acquired image;
a speed calculation unit that calculates a speed of the detection target; and
a filter processing unit that performs a filter process on the distance calculated by the distance calculation unit and the speed calculated by the speed calculation unit,
wherein the filter processing unit performs a plurality of filter processes for a predetermined period of time and then selects one of the plurality of filter processes.

2. The image processing device according to claim 1, wherein the distance calculation unit calculates a distance based on a parallax of a plurality of images obtained from a stereo camera.

3. The image processing device according to claim 2, wherein the plurality of filter processes are each provided a different initial speed and executed.

4. The image processing device according to claim 3, wherein one of the filter processes that is selected is a filter process with a smallest difference in distance when a predicted distance at the initial speed after the predetermined period of time is compared with a distance observed from a parallax of a plurality of images.

5. The image processing device according to claim 4, wherein the filter processing unit includes
an initial speed setting unit that sets a different initial speed for each of a plurality of filter processes,
a multi-filter processing unit that performs filter processes at the plurality of initial speeds set by the initial speed setting unit and estimates distances to the detection target tracked,
an observation residual accumulation calculation unit that calculates a residual between each of the distances for the plurality of filter processes obtained by the multi-filter processing unit and a calculated value of a distance obtained by the distance calculation unit, and accumulates the residual to obtain an accumulated observation residual value, and
an initial value selection unit that selects a filter process having the smallest accumulated observation residual value obtained by the observation residual accumulation calculation unit.

6. An image processing method comprising:
a distance calculation process of calculating a distance to a detection target searched from an acquired image;
a speed calculation process of calculating a speed of the detection target; and
a parallel filter process of performing a filter process on the distance calculated by the distance calculation process and the speed calculated by the speed calculation process, performing a plurality of filter processes for a predetermined period of time during the filter process, and then selecting one filter process from the plurality of filter processes.
